# EUROPEAN PATENT APPLICATION

(11) **EP 4 707 724 A1**
(43) Date of publication of application: **11.03.2026**
(21) Application number: 25199421.6
(22) Date of filing: 01.09.2025
(51) Int. Cl.: G01B 11/24, G01B 11/275

(54) **VEHICLE SERVICE SYSTEM**

(30) Priority: 06.09.2024 IT 202400019939
(71) Applicant: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(57) **Abstract**

Vehicle service system (1) comprising optical reader apparatuses (4), which are arranged in the vehicle service area (5), on opposite sides with respect to the longitudinal axis (A) of a vehicle (2). The vehicle service system (5) comprises at least two targets (8), which are arranged in the vehicle service area (5) in positions immediately adjacent to the respective optical reader apparatuses (4) so as to be positioned on the sides of the vehicle (2). The optical image reader apparatus (4) comprises a first optical image acquisition device (9) having a first field of view (V1), which frames the vehicle (2), and a second optical image acquisition device (10), which has a second field of view (V2) different from the first field of view (V1) and is structured so as to frame the target (8).

## Description

### CROSS-REFERENCE TO RELATED APPLICATIONS

This patent application claims priority from Italian patent application no. 102024000019939 filed on September 6, 2024, the entire disclosure of which is incorporated herein by reference.

### TECHNICAL FIELD

The invention relates to a vehicle service system.

More in detail, the invention relates to a vehicle service system configured to perform vehicle service functions such as the measurement of parts of the vehicle and/or the calibration of the sensors of an ADAS system of the vehicle and/or the determination of the alignment of the wheels of the vehicle, to which explicit reference will be made in the description below without because of this lacking generality.

### PRIOR ART

Vehicle service systems are known, which are provided with optical scanning apparatuses that determine the position of a vehicle in a service area relative to a predetermined reference system based on the processing of predetermined captured images of the vehicle, generally side images containing information relating to reference points of the vehicle, which are useful for detecting its position and are generally associated with axles and/or wheels, etc.

A known vehicle service system is described, for example, in the Applicant's European patent EP 4 012 328 B1. This system essentially involves the use of a series of optical reader apparatuses that are arranged so as to face the sides of the vehicle to capture images thereof.

Each optical reader apparatus comprises, at the bottom, a rectangular support plate for a target, which rests on the surface of the service area, and a vertical casing, which internally houses a binocular stereoscopic vision system, generally provided with two cameras.

One of the two cameras of the binocular stereoscopic vision system has a field of view that frames both the side of the vehicle and the underlying target.

A first technical problem encountered by the Applicant lies in the fact that the system described above features particularly significant dimensions of the target support. In fact, the Applicant has pointed out that, in order for the target to be included in the field of view of the binocular stereoscopic vision system, it has to be placed at a significant distance from the vertical casing.

This distance, however, causes, on the one hand, an occupation of a lateral band of the service area beside the vehicle, which forbids the positioning of other apparatuses necessary for the diagnosis or the calibration, and, on the other hand, affects the accuracy of the calibration.

A second technical problem encountered by the Applicant lies in the fact that the system described above suffers from reflections due to ambient light sources, windows, etc., which further affect the readability of the aforementioned targets.

A third technical problem encountered by the Applicant lies in the fact that the system described above requires the use of a lens (optics) of the camera with a particularly wide angle of view for detecting the image of the wheel and the target at the same time. Due to the angular width, said optical solution introduces optical distortions that impact on the precision of the measurements and that, in order to be eliminated or reduced, require the use of high-cost optical components or software image correction operations with results that are not compatible with the application in terms of precision.

### DESCRIPTION OF THE INVENTION

Therefore, the object of the invention is to provide a vehicle service system, which overcomes the technical problems discussed above.

The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- Figure 1 is a perspective view of a vehicle service system according to the invention,
- Figure 2 is a pan view of a vehicle service system according to the invention,
- Figure 3 is a perspective view of the optical image reader apparatus included in the vehicle service system shown in Figures 1 and 2,
- Figure 4 is a further perspective view of an optical image reader apparatus included in the vehicle service system shown in Figures 1 and 2,
- Figure 5 is a lateral elevation view of an optical image reader apparatus included in the vehicle service system shown in Figures 1 and 2,
- Figure 6 is an exploded view, on a larger scale, of an anchoring member for an optical image reader apparatus and of a target of the vehicle service system according to the invention, and
- Figure 7 shows a perspective view, with parts removed for greater clarity, of the service system shown in Figures 1 and 2.

### PREFERRED EMBODIMENTS OF THE INVENTION

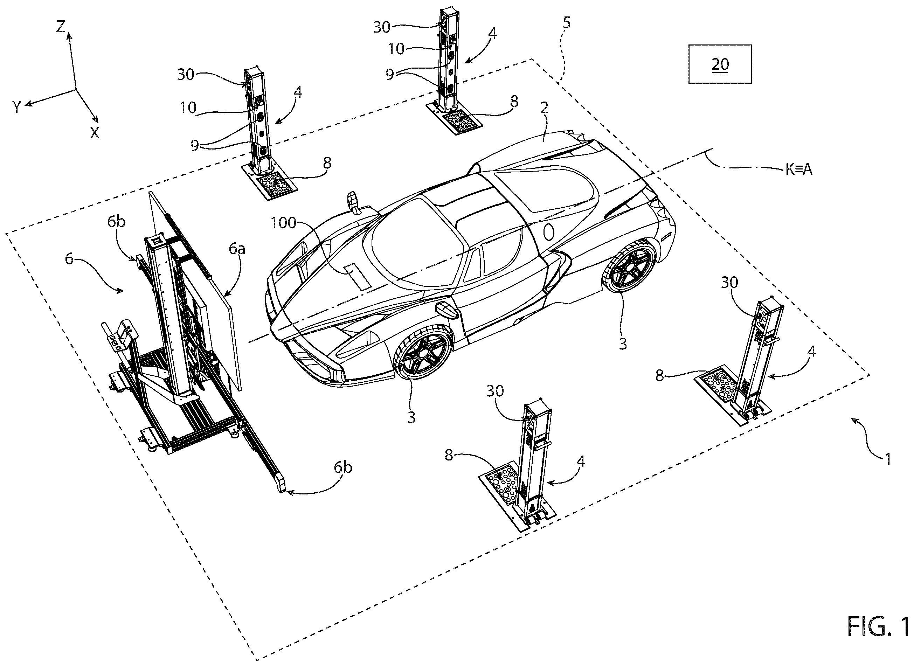

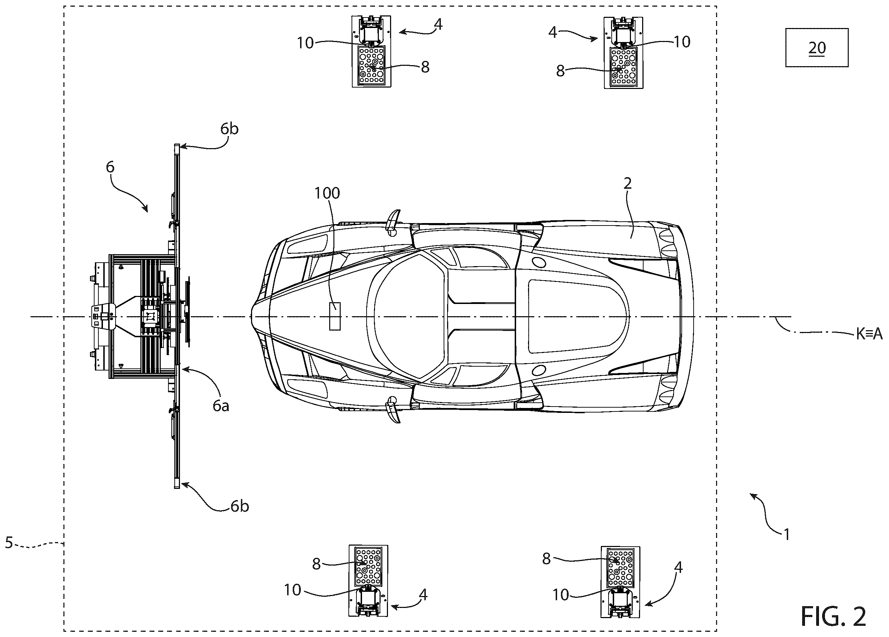

With reference to Figures 1 and 2, number 1 indicates, as a whole, a vehicle service system.

According to a possible embodiment, the vehicle service system 1 for a vehicle 2. The vehicle service system 1 is configured so as to measure and/or control and/or calibrate a vehicle 2 and/or parts/components of the vehicle 2.

In the example shown in Figures 1 and 2, the vehicle 2 is temporarily (for the time necessary to carry out the service operations) standing in a vehicle service area 5, which has a surface plane P (ground), on which, in use, the wheels 3 of the vehicle 2 rest, at least temporarily. In the example shown herein, the vehicle service area 5 has a central middle axis K (Figure 2).

The plane P can correspond, for example, to the support surface, for instance a horizontal one. The support surface can correspond to a floor/ground present in the vehicle service station 5, for example inside a workshop (which is not shown herein). Obviously, the plane P can comprise any plane on which the wheels 3 of the vehicle 2 rest.

The vehicle 2 can be a car (with an engine or an electric car), which, in the example shown in Figures 1 and 2, centrally has a longitudinal middle axis A and is provided with four wheels 3 coupled, in pairs, to two corresponding axles, namely a front axle and a rear axle, of the vehicle 2, which are transverse to the axis A (namely, orthogonal thereto in the accompanying Figures) and are at a given distance from one another (measured along the axis A).

In the description below, the term wheel 3 indicates a common wheel of a car comprising at least a rim and a tyre. Furthermore, the invention is not limited to a car, but can be applied to any type of motor vehicle provided with any number of wheels and axles, for example a truck or a lorry or a bus, having two or more axles and four or more wheels 3.

According to a possible embodiment, the vehicle service system 1 is provided with a processing and control system 20 configured so as to determine a series of geometric parameters characterizing the vehicle 2 and/or parts/components thereof based on first images relating to predetermined parts of the sides/flanks of the vehicle 2. According to a preferred embodiment of the invention, the geometric parameters of the parts/components of the vehicle can optionally relate to: the wheels 3 and/or the axles and/or the steering system (which is not shown herein). The geometric parameters of the wheels 3 can optionally comprise: the angle or plane of attack of the wheel, the camber angle of the wheel, the toe angle or plane of the wheel. The angles or planes can preferably be determined relative to at least one predetermined (three-dimensional) reference system SR.

The geometric parameters characterizing the wheels 3 used by the vehicle service system 1 for the control, for example, of the wheel alignment of the vehicle 2 are known and, therefore, will not be discussed any further.

According to the invention, the vehicle service system 1 comprises a plurality of optical reader apparatuses 4 (at least two of them), which are arranged in the vehicle service area 5 on opposite sides with respect to the axis A of the vehicle 2 (or the axis K of the area itself, so that they face opposite sides of the vehicle 2).

According to the invention, the vehicle service system 1 further comprises a plurality of targets 8 (at least two of them), which are arranged on the vehicle service area 5 in positions immediately adjacent to the respective optical reader apparatuses 4 so as to be positioned on the sides of the vehicle 2.

In an exemplary embodiment shown in Figures 1 and 2 and in the description that follows, reference will be made, without for this reason lacking generality, to a vehicle service system 1 comprising four optical image reader apparatuses 4 and four respective targets 8.

In the example shown in Figure 1 and 2, the optical image reader apparatuses 4 are arranged in pairs on opposite sides of the vehicle 2 laterally thereto. In the example shown herein, the two optical image reader apparatuses 4 are arranged on the plane P. In the description below, without because of this lacking in generality, but for the sole purpose of increasing the clarity of the invention, an example will be taken into account, in which the support plane P of the optical image reader apparatuses 4 is approximately coplanar to the support plane of the vehicle 2. However, according to the invention, the plane P could not be coplanar and/or parallel to the support plane of the vehicle 2.

The optical image reader apparatuses 4 are arranged, in pairs, so as to face two respective sides (lateral flanks) of the vehicle 2, which are parallel, on opposite sides, relative to the axis A and the axis K. In the example shown herein, the optical image reader apparatuses 4 are arranged, in pairs, so as to face the two respective sides of the vehicle 2 approximately in the area of the middle axis of the vehicle 2. However, the optical image reader apparatuses 4 can be arranged so as to face the wheels 3 of the vehicle 2.

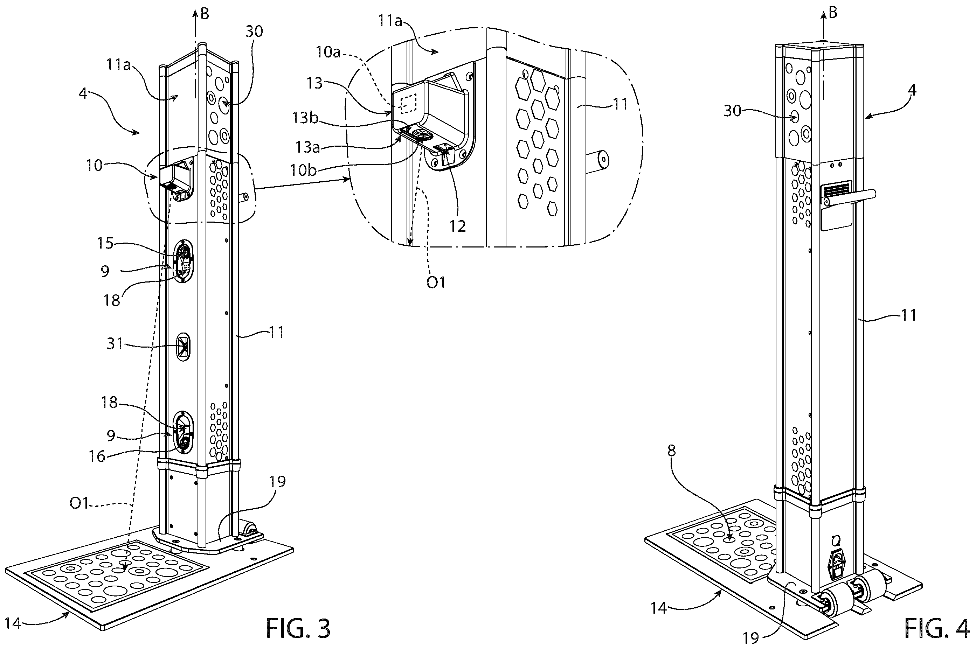

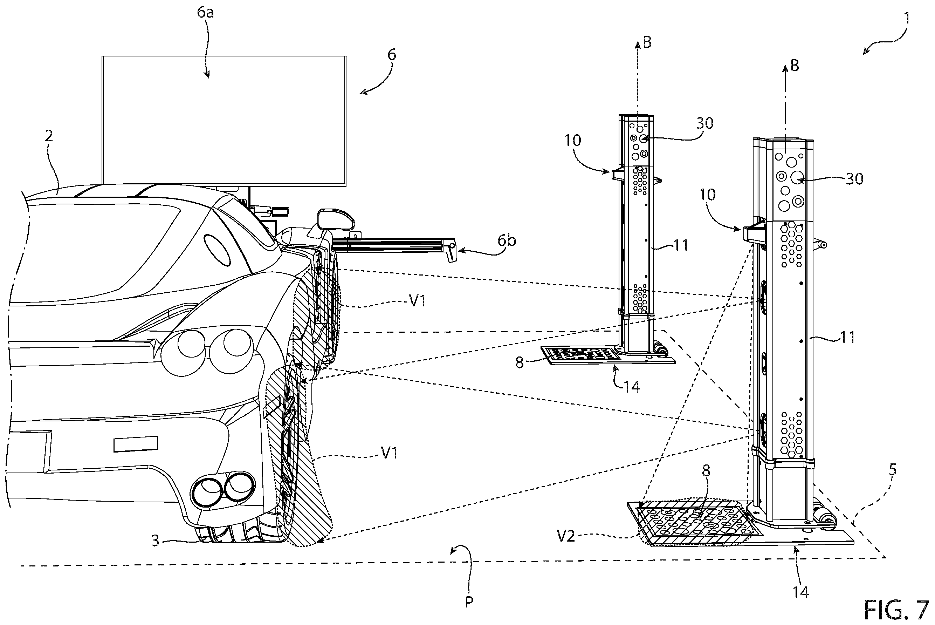

With reference to Figures 3-7, the optical image reader apparatus 4 is provided with one or more optical image acquisition devices 9, which are configured so as to have respective fields of view V1 (Figure 7) structured so as to at least partially frame a side of the vehicle 2 in order to capture first at least partial images of the side itself.

According to the invention, the optical image reader apparatus 4 is further provided with a second optical image acquisition device 10, which is configured so as to have a second field of view V2, which is different from the fields of view V1 and is structured so as to frame the target 8 adjacent to the optical reader device 4 in order to capture second images containing the target 8.

The technical effect obtained thanks to the optical image acquisition device 10 is that of reducing the dimensions of the target 8 and, on the other hand, increasing the accuracy of the calibration. As a matter of fact, the arrangement and orientation of the optical image acquisition device 10 towards the target allows to the distance between the target and the housing 11 to be reduced so as to decrease its overall dimensions on the plane. In addition, by positioning the optical image acquisition device 10 in a position "facing" the target 8 and above it, possible image distortions can be reduced, thus improving the accuracy of the system, especially during the calibration.

With reference to Figures 3-7, according to the invention, the target 8 is arranged immediately adjacent to said optical image reader apparatus 4 and is structured so as to be included in the field of view V2 of the optical image acquisition device 10.

Advantageously, the target 8 is arranged immediately adjacent to the relative optical image reader apparatus 4 so as not to be included in the fields of view V1 of the image acquisition devices 9.

With reference to Figures 3-6, according to a preferred embodiment, the optical image acquisition device 10 is further configured so as to only and exclusively frame the underlying target 8, immediately adjacent to the optical reader apparatus 4, so as to only and exclusively capture the second images containing the target 8.

Conveniently, the optical image acquisition device 10 is configured so that its field of view V2 does not frame the vehicle 2, for example its side/flank, so as not to capture the first images.

With reference to Figures 3-7, the optical reader apparatus 4 comprises an oblong housing 11 extending along an approximately vertical longitudinal axis B. In the example shown herein, the oblong housing 11 forms a support column.

Preferably, but not necessarily, the housing 11 can have an approximately quadrangular cross section transverse to the axis B so as to define four approximately vertical side walls.

According to a preferred embodiment, the target 8 has a planar shape and is arranged on the plane P approximately orthogonal to the axis B. In the example shown herein, the target 8 is approximately orthogonal to a side wall 11a of the housing 11 and is positioned immediately adjacent thereto. The target 8 firmly rests on the plane P immediately adjacent to the lower end of the vertical side wall 11a of the housing 11.

With reference to Figures 3, 5 and 7, the optical image acquisition device 10 is firmly fixed on the side wall 11a so as to project from it above the underlying target 8 so as to face the target 8. In the example shown herein, the optical image acquisition device 10 is arranged in the area of the upper end of the vertical side wall 11a of the housing 11.

Obviously, the invention is not limited to the positioning of the optical image acquisition device 10 at the lower end of the housing. Alternatively, the optical image acquisition device 10 can be arranged along the housing 11 below the upper end. For example, the optical image acquisition device 10 can be arranged in an intermediate axial position of the housing 11 or immediately above the lower end at a height from the target 8 such that the second field of view V2 frames the target 8.

Preferably, the optical image acquisition device 10 can comprise a (digital) camera or video camera or similar image acquisition devices. In the example shown in Figure 3, the optical image acquisition device 10 comprises a box-like case 13 formed by a cup-shaped body, which is firmly fixed on the side wall 11a of the housing 11 and has, on a lower wall 13a facing the plane P, a through opening 13b facing the underlying target 8. The optical image acquisition device 10 further comprises a photosensitive electronic sensor 10a and an optical assembly 10b, which are arranged in the case 13. The optical assembly 10b is arranged in the cup-shaped body so as to have the lens facing the opening 13b so as to be able to capture the image of the underlying target 8 through it.

Conveniently, the optical image acquisition device 10 further comprises a lighting device 12 configured so as to project a light or light beam onto the target 8 so as to irradiate/illuminate it. In the example shown herein, the lighting device 12 comprises a lighting source configured to emit light in the infrared spectrum. Conveniently, the lighting source can comprise one or more infrared light-emitting diodes, for example IR LEDs. Conveniently, the lighting device 12 is arranged in the case next to the optical assembly 10b on a plane approximately parallel to the lower wall 13a and faces a respective through opening obtained on the lower wall 13a next to the opening 13b. Conveniently, the optical image acquisition device 10 is firmly coupled to the housing 11 so that its optical axis O1 forms an angle α ranging from about 75° to about 105° (Figure 3) with the lying plane of the target 8,

With reference to Figures 3-7, the target 8 is integrated in, arranged on, a plate-shaped body 14. The plate-shaped body can comprise, for example, a slab or sheet or plate made of a rigid material, for example a metal or a polymer material. In the example shown herein, the plate-shaped body 14 has a quadrangular shape, preferably an approximately rectangular shape. Conveniently, the target 8 comprises a two-dimensional (quadrangular) image representing a predetermined (calibration) pattern. In the example shown herein, the pattern comprises a geometry containing circular graphic elements (circles) arranged in predetermined mutual positions within the perimeter of the target 8, some of them being concentric.

The plate-shaped body 14 is firmly arranged on the plane P in a position adjacent to the housing 11 so that its target 8 is immediately close to the lower end of the housing 11. Conveniently, the target 8 can have a distance D1 from the housing 11 ranging from about 1 cm to about 5 cm, preferably 3 cm.

The oblong housing 11 is structured so as to be coupled to the plate-shaped body 14 selectively and in a removable (separable) manner.

With reference to Figures 3 and 7, the optical image acquisition device 9 comprises at least two cameras 15 and 16, which are spaced apart from one another in the housing 11 one above the other along the axis B so as to have the respective optical assemblies facing the side of the vehicle 2. Conveniently, through openings can be obtained on the side wall 11a of the housing 11 in the area of the optical assemblies of the cameras 15 and 16 so as to allow them to capture the first images of the side of the vehicle 2.

In the example shown in Figure 3, the cameras 15 and 16 are arranged in an intermediate position in the housing 11, both below the optical image acquisition device 10. Conveniently, the cameras 15 and 16 are arranged in the housing 11 so as not to protrude from the wall 11a in order not to interfere with the field of view V2 of the optical image acquisition device 10.

According to a possible embodiment (not shown), the target 8 can be arranged adjacent to a vertical side wall of the housing 11 other than the vertical side wall 11a on which the observation openings of the cameras 15 and 16 are arranged. In this case, the optical image acquisition device 10 is arranged on the same wall facing/adjacent to the target 8. For example, the target 8 can be arranged adjacent to the rear vertical wall of the housing 11 opposite the side wall 11a (shown in the attached Figures) and the optical image acquisition device 10 can be fixed on the same rear wall above the target 8. Obviously, the target 8 could be arranged adjacent to any one of the other remaining vertical walls and the optical image acquisition device 10 could firmly be coupled to the same wall above the target 8.

The optical image reader apparatus 4 can further comprise at least one additional target 30, which is fixed on a side wall of the housing 11 facing the calibration apparatus 6. Conveniently, the optical image acquisition device 9 can comprise a lighting system 18 configured to generate lights or light beams converging towards the side of the vehicle 2 so as to irradiate/illuminate the area/s of the vehicle 2 included in the fields of view V1. In the example shown herein, the lighting device 18 comprises lighting sources configured to emit light in the infrared spectrum. In the example shown herein, the lighting sources can comprise infrared light-emitting diodes, for example IR LEDs, arranged in the casing 11 in the area of the through openings obtained in the vertical wall 11a. Conveniently, the lighting sources of the lighting system 18 can be arranged in the area of the openings obtained in the wall 11a immediately next to the optical assembly of the relative camera 15 or 16. The cameras 15 and 16 cooperate with the processing and control system 20 so as to implement a binocular stereoscopic vision method in order to provide the first images. The operation of the binocular stereoscopic vision method by means of two cameras in order to build a 3D image relating to the first images is known and will not be described any further.

The optical image reader apparatus can further comprise a lighter device 31, which is arranged along the housing 11 between the cameras 15 and 16 and is designed to project light towards the surfaces of the vehicle 2 included in the fields of view V1. The purpose of the structured laser light is that of improving the three-dimensional detection of the wheel 3.

The housing 11 can also be provided with a handle (Figure 4), for example, at the back, and with lower wheels resting on the ground.

With reference to Figure 3-7, the housing 11 has, at the lower end, a plate-shaped base 19 provided with coupling elements 21 that protrude from the lower face of the base 19 and are parallel to the axis B.

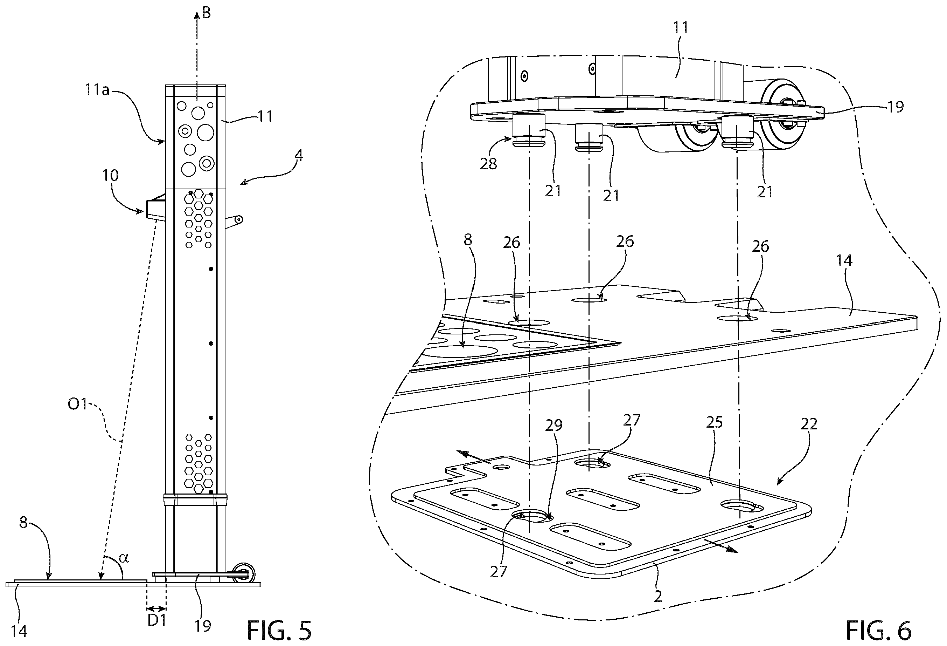

In the example shown herein, the plate-shaped body 14 supporting the target 8 is provided with through holes 26 parallel to the axis B designed to receive the coupling elements 21 and with a locking/unlocking device 22, which is configured so as to lock or alternatively unlock the coupling elements 21 of the housing 11, when the plate-shaped body 14 of the housing 11 rests on the plate-shaped body 14 and the coupling elements are inserted in the respective holes 26. As shown in Figure 6, the locking/unlocking device 22 can comprise two plates 24 and 25 provided with respective holes 27, which are axially aligned with the through holes 26 so as to receive, in use, the coupling elements 21. The plate 24 is firmly fixed on the plate-shaped body 14, while the other plate 25 is mounted so as to freely slide between the inner faces of the plate 24 and of the plate-shaped body 14 between an unlocking position, in which it allows the coupling elements 21 of the housing 11 to be extracted from the holes 26 and 27, and a locking position, in which it holds the coupling elements 21 axially engaged in the relative holes 26 and 27. Conveniently, the coupling elements 21 can comprise cylindrical bodies provided with an annular groove 28, while the holes 27 of the sliding plate 25 can be shaped so as to have a tab 29, which engages the annular groove 28 when the plate 25 is in the locking position, so as to engage the cylindrical element and axially lock it, and - vice versa - disengages the annular groove of the coupling element 21 when the plate 25 is in the unlocking position.

According to a possible embodiment, the electronic processing and control system 20 can be configured so as to optionally perform adjusting operations and calibration operations to be carried out on the optical image reader apparatuses 4 based on second images containing the targets 8.

The adjustment and calibration can advantageously be carried out by the electronic processing and control system 20 on the basis of the operations disclosed and shown in the Applicant's European patent EP 4 012 328 B1, whose content (description and drawings) is completely included herein by way of reference.

According to a preferred embodiment of the invention, the processing and control system 20 can also be configured so as to determine the position of the vehicle 2 within the vehicle service area 5 relative to the predetermined reference system SR. Conveniently, the processing and control system 20 can be able to determine the position of the vehicle 2 relative to the predetermined reference system SR based on the first images relating to predetermined parts of the sides/flanks of the vehicle 2, such as, for example, the axles and/or the wheels 3. The determination of the position of the vehicle 2 relative to the predetermined reference system SR based on the first images can advantageously be carried out by the electronic processing and control system 20 on the basis of the operations disclosed and shown in the Applicant's European patent EP 4 012 328 B1, whose content (description and drawings) is completely included herein by way of reference.

The electronic processing and control system 20 can also be configured so as to cooperate with the optical image reader apparatuses 4 and the targets 8 in order to perform a method for measuring and/or controlling the vehicle 2 and/or the parts/components of the vehicle 2. The method for measuring and controlling the vehicle 2 and/or the parts/components of the vehicle 2 can advantageously be carried out by the electronic processing and control system 20 on the basis of the first images implementing, for example, the operations disclosed and shown in the Applicant's European patent EP 4 012 328 B1, whose content (description and drawings) is completely included herein by way of reference.

With reference to Figures 1 and 2, the vehicle service system 1 further comprises, preferably but not necessarily, a calibration apparatus 6, which is configured so as to calibrate the electronic sensor devices, hereinafter referred to as ADAS (Advanced Driver Assistance System) sensors, comprised in an advanced driver assistance system 100 (ADAS system) of the vehicle 2 standing in the service area 5. The calibration apparatus 6 can be arranged in the service area 5 in front of and/or behind the vehicle 2.

The calibration apparatus 6 is designed to move in the service area 5 on the support plane P and comprises one or more calibration devices 6a, which are designed to be detected by a respective ADAS sensor of the ADAS system 100 of the vehicle 2 during the calibration of the ADAS sensor. According to a preferred embodiment, the electronic processing and control system 20 is configured so as to determine a first position indicative of the position of the calibration device 6 and/or of the position of the calibration device 6a relative to the vehicle 2, based on first data indicative of the position of the vehicle 2 in said service area 5 relative to the reference system SR and based on second data indicative of the position of the calibration device 6 relative to the predetermined reference system SR.

According to a preferred embodiment, the vehicle service system 1 can comprise a position detection system comprising at least two or more optical apparatuses 4 and two cameras 6b, which are mounted on the calibration apparatus 6 so as to be arranged in lateral positions, on opposite sides relative to said calibration device 6a.

The two cameras 6a are optically oriented towards the optical apparatuses so as to capture the third images containing the targets 30 of said optical reader apparatuses 4.

According to a preferred embodiment, the processing and control system 20 is configured so as to determine the first data based on the first images and the second data based on the third images.

According to a preferred embodiment, the processing and control system 20 is configured so as to determine a first position indicative of the position of the calibration apparatus 6 and/or of the position of said calibration device 6a relative to the vehicle 2, based on the first images and on the third images.

Conveniently, the processing and control system 20 is configured to determine a first position indicative of the position of the calibration apparatus 6 and/or of the position of said calibration device 6a relative to the vehicle 2 by implementing, for example, the operations described in European patent application EP 4 050 303A1. The vehicle service system 1 further comprises a communication system (not shown), preferably a wireless one, configured so as to exchange data and/or information and/or images between the optical image reader apparatuses 4 and/or the processing and control system 20 and/or the calibration apparatus 6.

In use: the plate-shaped bodies 14 supporting the targets 8 are firmly fixed on the plane P in opposite positions, namely on opposite sides of the vehicle 2, the optical image reader apparatuses are coupled to the respective plate-shaped bodies 14 in a firm, but removable manner. When the housing 11 is coupled to the relative plate-shaped body 14, the axis B is approximately vertical, its optical image acquisition device 10 is arranged above the target 8 so as to frame it.

When the vehicle service system 1 performs the function of calibrating the optical image reader apparatuses 4: the optical image acquisition devices 9 provide respective data/signals encoding one or more images at least partially containing said opposite sides of the vehicle 2; the electronic processing and control system 20 processes the data/signals in order to determine/build one or more three-dimensional images relating to the vehicle 2 and/or to parts of the vehicle 2; the optical image acquisition device 10 captures one or more images of the underlying target 8 in order to provide respective data/signals encoding the image of the target 8; the electronic processing and control system 20 carries out the calibration of the optical reader apparatuses 4 based at least on the images of the respective targets 8.

When the vehicle service system 1 determines the position of the calibration apparatus 6 relative to the reference system SR: the optical apparatuses 8 capture first images containing images of the vehicle 2; the cameras 6b capture third images containing the targets 30 of the optical apparatuses 4; the processing and control system 20 determines a first position indicative of the position of the calibration apparatus 6 and/or of the position of the calibration device 6a relative to the vehicle 2, based on said first images and on the third images.

The processing and control system 20 can also automatically guide the movement of the calibration apparatus 6 and/or the movement of said calibration device 6a to a predetermined calibration position based on said determined first position.

The processing and control system 20 is further designed to determine, based on the images of the targets 8, a spatial reference plane for detecting the position of the vehicle 2 in said vehicle service area 5.

In use, the targets 8 are positioned during the installation of the plate-shaped bodies 14, for example by means of a template supplied to the installer. Following the installation of the targets 8, the vehicle service system 1 performs the calibration operations described above to accurately determine the position of each target 8 so as to provide the spatial coordinates to the processing and control system 20.

The system described above has the advantage of allowing the target 8 to be positioned immediately adjacent to the housing. Furthermore, the positioning of the optical image acquisition device 10 on the housing above the target determines an increase in the accuracy of the system.

The system described above also has the advantage of increasing the readability of the targets since, thanks to the optical image acquisition device 10 positioned above the target 8, the effect of reflections due to ambient light sources is substantially eliminated.

The system described above also has the advantage of being able to eliminate the use of the expensive lens (optics) of the camera having a particularly wide angle of view for detecting the image of the wheel and the target at the same time. Thanks to this, the system described above allows optical distortions to be eliminated without requiring the expensive use of optical components and/or specific software correction operations, thus conveniently reducing the manufacturing costs of the system.

## Claims

1. Service-vehicle system (1) for at least one vehicle (2) arranged in a service-vehicle area (5),
the system includes
at least two optical reader devices (4), which are arranged in the service-vehicle area (5), from opposite bands with respect to the longitudinal axis (A) of the vehicle (2), so that they face opposite sides of the vehicle (2) itself,
at least two targets (8) that are arranged on the service area-vehicles (5) in positions immediately adjacent to the respective optical reader apparatuses (4) such that they are positioned to the side of the vehicle (2),
wherein the optical reader apparatus (4) comprises:
at least a first optical imaging device (9), which is configured to have a first field of view (V1) structured to at least partially frame one side of the vehicle (2) in order to capture at least partial first images of the side of the vehicle (2) itself,
a second optical imaging device (10), which is configured to have a second field of view (V2) that is structured to frame the target (8) immediately adjacent to said the optical reader apparatus (4) in order to capture second images containing the target (8) itself,
and in which
the target (8) is arranged immediately adjacent to said optical reader apparatus (4) and is structured such that it is comprised in the second field of view (V2) of said second optical imaging device (10) and is not included in the first field of view (V1) of said first optical imaging device (9).

2. System according to claim 1, wherein the second optical imaging device (10) is configured in order that the second field of view (V2) frames only and exclusively the target (8) immediately adjacent to said optical reader apparatus (4) so as to capture only and exclusively the second images containing the target (8).

3. System according to claim 1 or 2, wherein the second optical imaging device (10) is configured such that the second field of view (V2) does not frame the vehicle (2) so as not to capture said first images.

4. System according to any one of the preceding claims, wherein the optical image reader apparatus (4) comprises an oblong housing (11) extending along an approximately vertical longitudinal axis (B) and having an approximately vertical first side wall (11a),
said target (8) comprises a body-planar which is arranged on the service area (5) on a bedding plane (P) about orthogonal to said first wall (11a) of said housing (11) and is positioned immediately abutting the same,
said second optical imaging device (10) is fixed stably on said first wall (11a) so as to project cantilever from it above said target (8) so as to face the target (8) itself.

5. System according to claim 4, wherein
the target (8) is arranged abutting the lower end of said first wall (11a) of said housing (11),
the second optical imaging device (10) is arranged at about the upper end of said first wall (11a) of said housing (11).

6. System according to claim 4 or 5, wherein the second optical imaging device (10) comprises a digital photosensitive sensor and an optical assembly that is arranged to face said target (8) and has an optical axis (O1) that forms with the lay plane of said target (8), an angle between about 75° and about 105°.

7. System according to claim 4 and any one of claims 5 to 6 wherein:
the housing (11) has inferiorly a tiled base provided with protruding coupling elements,
the target (8) includes a support platelike body that is structured to be stably coupled to the plane (p) of said service-vehicle area (5), and a locking/unlocking device configured to lock or alternatively unlock said coupling elements of said housing (11) when the flat plate of the housing (11) is disposed in support of said support platelike body of the target (8).

8. System according to any one of the preceding claims, wherein said optical image reader apparatus (4) comprises at least one light source configured to generate a light beam designed to illuminate said target (8).

9. System according to any one of the preceding claims, further comprising an electronic processing and control system (2) which is designed to calibrate said optical image reader apparatus (4) based on said first and second images.

10. System according to any one of the preceding claims, wherein said electronic processing and control system (2) is designed to determine the position of said vehicle (2) in said service area (5) relative to a predetermined reference system (SR) on the basis of said first images.

11. System according to claim 10 comprising
a calibration apparatus (6), which is configured to calibrate at least one ADAS sensor (3) comprised in an advanced driver assistance system (100) of said vehicle (2), said calibration apparatus (2) being configured in order to move into said vehicle service area (5) and comprising at least one calibration device (6a), which is configured to be detected by said ADAS sensor (3) during calibration of said ADAS sensor (3),
said electronic processing and control system (2) is configured to determine a first position indicative of the position of said calibration device (6) and/or the position of said calibration device (6a) with respect to said vehicle (2), based on first data indicative of the position of said vehicle (2) in said service area (5) with respect to said reference system (SR) and based on second data indicative of the position of said calibration device (6) with respect to said predetermined reference system (SR).

12. System according to claim 11 wherein
said optical reader apparatus (4) has respective targets (30) that are oriented in order to face said calibration apparatus (6),
and wherein said calibration apparatus (6) comprises two cameras (6b) which are arranged in side positions, from opposite bands with respect to said calibration apparatus (6a); the two cameras (6b) are optically oriented towards said optical image reader apparatuses (4) to capture third images containing said targets (30) of said optical image reader apparatuses (4),
the processing and control system 20 is configured in order to determine the second data indicative of the position of the said calibration apparatus (6) with respect to the said predetermined reference system (SR) based on the third images.

13. A method for controlling a vehicle (2) arranged in a service-vehicle area (5), wherein the method comprises:
arranging two optical reader devices (4) on the service-vehicle area, from opposite bands to the longitudinal axis (A) of a vehicle (2), so that they face opposite sides of the vehicle (2) itself,
arranging at least two targets (8) on the service-vehicle area (5) in positions immediately adjacent to the respective optical reader apparatuses (4) so as to be positioned to the side of the vehicle (2),
wherein the optical reader apparatus (4) comprises:
at least a first optical imaging device (9), which is configured to present a first field of view (V1) structured to at least partially frame one side of the vehicle (2) so as to capture at least partial first images of the side of the vehicle (2) itself,
a second optical imaging device (10), which is configured to present a second field of view (V2) that is structured to frame the target (8) immediately adjacent to said optical reader apparatus (4) so as to capture second images containing the target (8) itself,
and wherein
the method comprises the step of arranging the target (8) immediately adjacent to said optical reader apparatus (4) in order to be included in the second field of view (V2) of the second optical imaging device (10) and not to be included in the first field of view (V1) of the first optical imaging device (9).

14. Optical reader apparatus (4) configured to be arranged on a service area-vehicle (5) at a target (8), such that it faces one side of a vehicle (2) arranged in the service area (5) itself,
wherein the optical reader apparatus (4) comprises:
at least a first optical imaging device (9), which is configured to present a first field of view (V1) structured to at least partially capture frame a side of the vehicle (2) so as to capture at least partial first images of the side of the vehicle (2) itself,
a second optical imaging device (10), which is configured to present a second field of view (V2) that is structured to frame the target (8) immediately adjacent to said the optical reader device (4) so as to capture second images containing the target (8) itself.
